# EUROPÄISCHE PATENTSCHRIFT

(11) **EP 3 781 524 B1**
(45) Veröffentlichungstag und Bekanntmachung des Hinweises auf die Patenterteilung: **07.06.2023**
(21) Anmeldenummer: 19723028.7
(22) Anmeldetag: 23.04.2019
(51) Int. Cl.: C02F 1/463, C02F 1/461

(54) **ELEKTROCHEMISCHER FÄLLUNGSREAKTOR**
ELECTROCHEMICAL PRECIPITATION REACTOR
RÉACTEUR DE PRÉCIPITATION ÉLECTROCHIMIQUE

(30) Priorität: 19.04.2018 DE 102018109314
(43) Veröffentlichungstag der Anmeldung: 24.02.2021
(73) Patentinhaber: Eisenhuth GmbH & Co. KG, 37520 Osterode (DE); Technische Universität Clausthal, 38678 Clausthal-Zellerfeld (DE)
(72) Erfinder: KUNZ, Ulrich, 37520 Osterode (DE); MUDDEMANN, Thorben, 38678 Clausthal-Zellerfeld (DE); SIEVERS, Michael, 38678 Clausthal-Zellerfeld (DE); HAUPT, Dennis, 38723 Seesen (DE); HICKMANN, Thorsten, 37520 Osterode (DE); HENKEL, Rouven, 37520 Osterode (DE)
(74) Vertreter: REHBERG HÜPPE + PARTNER
(86) Internationale Anmeldenummer: PCT/EP2019/060345
(87) Internationale Veröffentlichungsnummer: WO 2019/202161

(56) Entgegenhaltungen:
- EP-A1- 2 383 230
- DE-A1- 2 649 649
- US-A- 3 558 465
- US-A- 5 439 566
- US-A1- 2008 223 731
- US-A1- 2017 291 832

## Beschreibung

### TECHNISCHES GEBIET DER ERFINDUNG

Die Erfindung bezieht sich auf einen elektrochemischen Fällungsreaktor und eine Verwendung des Fällungsreaktors. Insbesondere bezieht sich die Erfindung auf einen elektrochemischen Fällungsreaktor mit den Merkmalen des Oberbegriffs des unabhängigen Patentanspruchs 1 und auf eine Verwendung dieses Fällungsreaktors zur Vorbehandlung einer Flüssigkeit.

### STAND DER TECHNIK

Bei einer elektrochemischen Behandlung einer Flüssigkeit wird die Flüssigkeit mit einer elektrisch leitfähigen Elektrode und einer elektrisch leitfähigen Gegenelektrode in Kontakt gebracht und zwischen der Elektrode und der Gegenelektrode eine elektrische Spannung angelegt. Das Vorzeichen der zwischen der Elektrode und der Gegenelektrode angelegten Spannung führt dazu, ob die Elektrode bei der elektrochemischen Behandlung als Kathode oder Anode wirksam wird. Die angelegte elektrische Spannung löst chemische Reaktionen in der Flüssigkeit aus. Dabei hängen diese Reaktionen neben der Zusammensetzung der Flüssigkeit von der Höhe der angelegten Spannung und dem Material der Elektroden ab.

Eine elektrochemische Behandlung von Wasser kann durchgeführt werden, um den Kalkgehalt des Wassers zu reduzieren. Dabei wird eine lokale Alkalisierung der Kathodenoberfläche infolge der Wasserelektrolyse ausgenutzt, die das Kalk-Kohlensäuregleichgewicht so verschiebt, dass Kalk an der Kathode ausfällt und so von dem Wasser entfernt werden kann. Der ausfallende Kalk lagert sich jedoch zu wesentliche Teilen direkt auf der Kathode ab und überzieht diese mit einer isolierenden Kalkschicht, so dass die Kathode ihre elektrische Leitfähigkeit einbüßt. Zumindest wird die aktive Fläche der Kathode verringert, wodurch sich unerwünscht hohe lokale Stromdichten ergeben.

Eine elektrochemische Behandlung von Flüssigkeiten kann auch mit dem Ziel erfolgen, bestimmte Inhaltsstoffe der Flüssigkeiten gezielt zu oxidieren. Diese Oxidation kann beispielsweise durchgeführt werden, um Pharmaka, mit denen ein Abwasser belastet ist, abzubauen. Dabei kann die gewünschte Oxidation durch Verwendung bestimmter Materialien für die Elektroden gefördert werden. Als vorteilhaft hat sich die Verwendung von bordotierten Diamantelektroden erwiesen. Diese sind jedoch sehr kostspielig und nur dann wirtschaftlich einsetzbar, wenn sehr lange Standzeiten erreicht werden. Bei der Behandlung von kalkhaltigen Abwässern ist jedoch die Standzeit von bordotierte Diamantelektroden zumindest bei ihrer Verwendung als Kathoden begrenzt, weil an ihnen auch Kalk ausfällt, der auch dann, wenn größerer Aufwand betrieben wird, kaum ohne Beschädigungen der Elektroden entfernt werden kann. Es besteht zwar grundsätzlich die Möglichkeit, die Verkalkung von Elektroden durch Umpolung, so dass die bisherige Kathode zur Anode wird und umgekehrt, zu verzögern bzw. rückgängig zu machen. Ein solches Umpolen reduziert jedoch den Wirkungsgrad der jeweiligen elektrochemische Behandlung, ist nicht in allen elektrochemischen Reaktoren möglich und wirkt sich seinerseits eher negativ auf die Standzeit bordotierter Diamantelektroden aus.

Aus der EP 1 002 765 B1 sind eine Vorrichtung und ein Verfahren zur Behandlung von Wasser gegen Kalkablagerungen mittels elektrolytischer Bildung von Kalziumkarbonat-Kristallen bekannt. Hierzu wird eine Elektrolyseeinrichtung mit Elektroden verwendet, zwischen denen eine Spannung angelegt wird, die zur elektrolytischen Spaltung von Wasser geeignet ist. Die Elektroden umfassen eine bürstenförmig ausgebildete Kathode mit Borsten aus flexiblem Material, deren Oberfläche ständig oder in zeitlichen Abständen durch eine Torsions- oder Biegebewegung relativ zu den auf der Kathode abgeschiedenen Kalkkristallen bewegt wird und so deren Abplatzen bewirkt. Dazu kann ein Abstreifer vorgesehen sein, der zumindest teilweise in die freien Enden der Borsten eintaucht und relativ zu den Borsten bewegt wird. Zu der bürstenförmigen Kathode, deren länglichen Borsten auf die Anode gerichtet sind, wird angegeben, dass sich an den Spitzen relativ hohe elektrische Feldstärken des Elektrolysefelds ergeben und hierdurch bevorzugt an den Spitzen der Borsten Kalkkristalle gebildet bzw. abgeschieden werden. Tatsächlich ist eine solche inhomogene Verteilung des Elektrolysefelds und eine daraus resultierende Konzentration der elektrochemischen Reaktionen auf einen kleinen Anteil der Oberfläche der Kathode jedoch nachteilig, unter anderem weil hierdurch die Kathode lokal übermäßig beansprucht werden kann, statt vollflächig aktiv zu sein.

Aus R. Kraft et al.: Electrochemical water disinfection Part III: Hypochlorite production from potable water with ultrasound assisted cathode cleaning, Journal of Applied Electrochemistry 32, 597-601, 2002 ist es bekannt, die Ablagerung von Kalziumkarbonat an der Oberfläche einer Kathode eines zur Wasserdesinfektion verwendeten elektrochemischen Reaktors durch Ultraschall zu verhindern bzw. zu entfernen. Dabei wird die Kathode als Sonotrode verwendet, die von einem Ultraschallwandler zu Schwingungen mit einer Frequenz von 24 kHz angeregt wird. Die Kathode ist aus einem mit Rutheniumoxid beschichteten Titanstreckgitter ausgebildet. Die Anregung der Kathode zu Ultraschallschwingungen kann kontinuierlich oder intermittierend erfolgen. In jedem Fall führen die Ultraschallschwingungen zu einer mechanischen Beanspruchung des Reaktors, die dessen Lebensdauer beeinträchtigt.

Aus der EP 0 658 277 B1 ist eine flexible, leitende Plastikelektrode bekannt. Die Elektrode umfasst ein biegsames, leitendes Kunststoffmaterial und eine weitere Elektrodenkomponente, bei der es sich um ein Metallsieb, ein Metallblech, eine Metallfolie oder ein Graphitfilz handelt. Das Kunststoffmaterial umfasst ein leitendes Füllmaterial und ein thermoplastisches Polymer mit einer mäßigen bis hohen Kristallinität oder einer Glasübergangstemperatur oberhalb der Betriebsbedingungen der Elektroden und ein elastomeres Polymer. Das Kunststoffmaterial weist einen spezifischen Widerstand von nicht mehr als 4.000 Ohm x cm auf. Die Elektrode ist biegsam und weist eine hohe Zugfestigkeit auf. Die weitere Elektrodenkomponente ist druck- und wärmegeschweißt und befindet sich auf wenigstens einer Fläche des biegsamen, leitenden Kunststoffmaterials, oder sie ist als Metallfolie oder Metallnetz zwischen zwei Schichten des leitenden Kunststoffmaterials angeordnet. Das Füllmaterial kann Ruß, Graphit, Metallpulver, metallisierte Glasfasern oder Kohlenstofffasern umfassen. Der Ruß kann verschiedene Rußtypen, nämlich feines Rußpulver mit einer Teilchengröße von 2 bis 35 nm und grobes Rußpulver mit einer Teilchengröße von 35 bis 10000 nm umfassen. Das thermoplastische Polymer kann Polyethylen geringer Dichte, Polyethylen hoher Dichte, Polyprophylen, Polybuthylen oder Polystyrol umfassen. Verwendung findet die bekannte Elektrode als Kathode oder Anode in einer Ganz Vanadium-Redox-Batterie, wobei sie mit einem Anolyten bzw. einem Katholyten in Kontakt steht.

Aus der DE 30 20 475 A1 sind ein Verfahren zur elektrochemischen Behandlung einer Lösung, die ein bestimmtes Material enthält, und eine elektrochemische Zelle zur Durchführung des Verfahrens bekannt. Die Lösung wird mit einer Seite einer porösen bipolaren Barrieren-Elektrode unter derartigen elektrochemischen Bedingungen in Berührung gebracht, dass das Material reagiert und ein Produkt erzeugt. Das Produkt wird auf dieser einen Seite abgelagert, tritt aber durch die poröse bipolare Barrieren-Elektrode auf deren andere Seite hindurch. Das Produkt reagiert in einer zweiten Lösung auf der anderen Seite der Barrieren-Elektrode, um ein zweites Produkt zu erzeugen. Die poröse bipolare Barrieren-Elektrode ist geerdet und befindet sich auf einem ersten vorbestimmten elektrischen Potenzial gegenüber einer Bezugselektrode in der Lösung auf ihrer einen Seite und auf einem zweiten vorbestimmten elektrischen Potenzial gegenüber einer Bezugselektrode in der zweiten Lösung auf ihrer anderen Seite. Die poröse bipolare Barrieren-Elektrode besteht aus einem porösen elektrisch leitfähigen Material in Form von expandiertem Metallblech oder einem anderen Leitermaterial, das von einem porösen und nicht leitfähigen Material getragen wird. Eine periodische Veränderung der vorbestimmten elektrischen Potenziale auf den beiden Seiten der porösen Barrieren-Elektrode, beispielsweise durch Anlegen eines Kippimpulses oder einer anderen geeigneten Wellenform, kann einen Vorteil im Hinblick auf eine Reinigung von Fremdkörpern aus der Barrieren-Elektrode ergeben. Die Lösungen können durch Schall in Bewegung gesetzt werden, indem sie mit einem vibrierenden Wandler gesteuerte Amplitude und Frequenz angeregt werden. Eine weitere Möglichkeit besteht darin, hydraulische Impulse mit einem intermittierenden Ventilsystem oder über einen Antriebskolben einzuführen. Das bekannte Verfahren kann zur Entfernung von Schwermetallen aus Abwässern, Kloaken oder Schlamm genutzt werden, oder um synthetische chemische Reaktionen durchzuführen.

Aus der DE 23 50 078 A1 ist ein Verfahren zur Reinigung und/oder Entkeimung von metallischen Wasserrohren bekannt, bei dem in das zu behandelnde Rohr eine flexible Metallelektrode eingebracht und zwischen Rohr und Metallelektrode eine Gleichspannung, überlagert von einer Impulsspannung entgegengesetzter Polarität angelegt wird. Die flexible Metallelektrode ist von einem aus porösem Material bestehenden flexiblen, vorteilhafterweise aus Kunststoff gefertigten, schlauchförmigen Diaphragma umgeben. Sie wird in das von Ablagerungen zu befreiende und/oder zu entkeimende Rohr eingebracht, indem sie über ein Leitseil eingezogen oder mit Pressluft oder durch Einspülen mit Druckwasser eingeschossen wird. Damit die flexible Metallelektrode und das Diaphragma die Rohrwandung nicht berühren können, sind Distanzvor-richtungen vorgesehen. Durch die zwischen dem Rohr und die Metallelektrode angelegte Gleichspannung werden an dem Rohr anhaftende Verkrustungen und Ablagerungen abgelöst, wobei die Kationen durch das Diaphragma zur flexiblen Elektrode wandern und dort von Spülwasser, mit dem das schlauchförmige Diaphragma durchspült wird, entfernt werden.

Aus der DE 11 2011 103 131 T5 ist eine Metallionensterilisierungsvorrichtung bekannt, die zwei ineinander angeordnete konusförmige Elektroden und einen dazwischen angeordneten Isolierungshalter aufweist. Der Isolierungshalter ist gegenüber den Elektroden um deren zusammenfallende Konusachsen verdrehbar und weist Bürsten auf, die Fremdkörper entfernen, indem sie an den einander gegenüber liegenden Außen- und Innenflächen der konusförmigen Elektroden reiben.

Aus der US 3 857 764 A ist ein Verfahren zur elektrochemischen Behandlung von inneren Oberflächen größerer Gefäße bekannt. Dazu wird eine Elektrodenvorrichtung mit einem Paar von Kupfernetzelektroden verwendet, die auf einem entfaltbaren Kunststoffsack angeordnet sind und durch Entfalten des Kunststoffsacks in dem jeweiligen Gefäß gegenüber der Wandung des Gefäßes ausgerichtet werden.

Aus der US 5 439 566 A sind eine Vorrichtung und ein Verfahren zur Entkalkung von Wasser bekannt. Die Vorrichtung weist kreisscheibenförmige Elektroden auf. Um sich daran ablagernden Kalk zu entfernen, werden die kreisscheibenförmigen Elektroden in Schwingungen versetzt, indem eine zentrale und normal zu ihrer Haupterstreckungsebene verlaufende Anschlussstange axial hin und her bewegt wird.

Aus der US 2017/0 291 832 A1 ist ein elektrolytischer Wasserweichmacher bekannt. Mindestens eine Kathode und mindestens eine Anode erstrecken sich in einen Behälter hinein. Eine Spannungsversorgung ist an die Kathode und die Anode angeschlossen. Eine Vibrationseinrichtung versetzt die Kathode in Schwingungen. Weiterhin ist ein System vorgesehen, um von der Kathode bei Betätigung der Vibrationseinrichtung freigesetztes Material einzusammeln. Die Kathode kann aus einem Kunststoffmaterial mit einer metallischen Außenseite ausgebildet sein.

Die US 2008/ 0 223 731 A1 offenbart eine Elektrokoagulationsvorrichtung und ein Verfahren zur Abwasserbehandlung unter deren Verwendung. Um eine Passivierung von Anoden- und Elektrodenplatten durch Ablagerungen zu verhindern, sind gegenüber den Elektrodenplatten motorische bewegte Abstreifer vorgesehen. Die Elektrodenplatten können aus Material ausgebildet sein, das Ionen für einen Elektrolyseprozess bereitstellt. Vorzugsweise sind die Elektrodenplatten aus Eisen, Titan, Platin, Stahl, Aluminium, Kupfer, Kohlenstoff, mit Metall imprägniertem Kunststoff, Keramik oder einer Mischung davon hergestellt.

Aus der US 3 558 465 A ist eine elektrolytische Zelle zur Herstellung von Chlorlösungen durch Elektrolyse bekannt. Die Kathode dieser elektrolytischen Zelle ist aus einem Metall ausgebildet, das aus Zink, Magnesium und Aluminium ausgewählt ist. Die Kathode hat eine gekrümmte Gestalt mit einer glatten Konfiguration. Eine alternierende Ausdehnung und Kontraktion der glatten Kathodenoberfläche, die während alternierendem Erwärmens und Abkühlens der Kathode auftritt, erhöht die Fähigkeit der Kathode, anhaftenden Kalk abzuwerfen.

### AUFGABE DER ERFINDUNG

Der Erfindung liegt die Aufgabe zugrunde, einen elektrochemischen Fällungsreaktor und eine Verwendung dieses Fällungsreaktors aufzuzeigen, bei denen mit einfachen Mitteln verhindert wird, dass die Elektrode durch ausgefällte Substanzen inaktiviert wird, so dass die Lebensdauer der Elektrode und des gesamten Fällungsreaktors maximiert wird.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Bei dem erfindungsgemäßen elektrochemischen Fällungsreaktor ist die Flächenelektrode nicht mit Borsten oder dergleichen besetzt ist. Im Gegenteil ist die gesamte Elektrode in aller Regel nicht strukturiert und die Flächenelektrode weist dort, wo sie mit der in dem Fällungsreaktor zu behandelnde Flüssigkeit in Kontakt gelangt, eine möglichst glatte Oberfläche auf. Diese glatte Oberfläche verhindert in Verbindung mit den Verformungen der Elektrode das Aufwachsen der aus der Flüssigkeit ausgefällten Substanzen, und sie erleichtert auch das Entfernen von aufgewachsenen Substanzen durch Verformen der Elektrode. Die gewünschte glatte Oberfläche der Elektrode und auch eine leichte Verformbarkeit der Flächenelektrode werden erreicht, indem die Flächenelektrode eine flexible Kunststoffmatrix mit kleinen eingebetteten elektrisch leitfähigen Partikeln umfasst.

In der Anwendungspraxis hat sich herausgestellt, dass eine Flächenelektrode, die eine Kunststoffmatrix mit eingebetteten elektrisch leitfähigen Partikeln umfasst und dort, wo sie mit der in dem Fällungsreaktor zu behandelnden Flüssigkeit in Kontakt gelangt, eine glatt geformte Oberfläche aufweist, auch ohne wiederholtes Verformen während ihres Einsatzes in einem elektrochemischen Fällungsreaktor nicht dazu neigt, dass aus der Flüssigkeit ausfallende Substanzen aufwachsen, wodurch die Elektrode inaktiviert wird. Dies gilt auch und gerade, wenn eine solche Flächenelektrode als Kathode in einem elektrochemischen Fällungsreaktor zum Ausfällen von Kalk aus Wasser einsetzt wird. Unter einer glatt geformten Oberfläche ist insbesondere eine solche Oberfläche zu verstehen, die durch Ausformen der Flächenelektrode in einem Formwerkzeug mit glatten Innenoberflächen entstanden ist.

Dass die elektrisch leitfähige Elektrode mit der in den Fällungsreaktor zu behandelnden Flüssigkeit in Kontakt gelangt, bedeutet, dass die elektrisch leitfähige Elektrode an einen Reaktionsraum des erfindungsgemäßen elektrochemischen Fällungsreaktors angrenzt, der die zu behandelnde Flüssigkeit aufnimmt.

Unter einer Flächenelektrode wird hier eine Elektrode verstanden, die sich im Wesentlichen längs einer nicht notwendigerweise ebenen Fläche erstreckt und daher zwei Hauptoberflächen aufweist. Die ebene Fläche, längs der sich die Flächenelektrode erstreckt, wird hier auch als ihre Haupterstreckungsfläche bezeichnet. Senkrecht zu ihrer Haupterstreckungsfläche weist die Flächenelektrode nur eine vergleichsweise geringe Ausdehnung auf. Diese geringe Ausdehnung beträgt regelmäßig nicht mehr als 20 %, typischerweise nicht mehr als 15 %, vielfach nicht mehr als 10 % und oft nicht mehr als 5 % der kürzesten Ausdehnung der Flächenelektrode längs ihrer Haupterstreckungsfläche. Oftmals ist die noch nicht verformte Flächenelektrode eben und erstreckt sich mit ebenen Hauptoberflächen parallel zu einer Haupterstreckungsebene.

Dabei kann die Flächenelektrode quer zu ihrer flächigen Erstreckung vollständig geschlossen sein, d. h. keine Durchbrechungen, Querkanäle oder offene Porosität aufweisen. Alternativ kann die Flächenelektrode eine begrenzte Durchlässigkeit für die zu behandelnde Flüssigkeit quer zu ihrer flächigen Erstreckung aufweisen, wobei ein von der zu behandelnden Flüssigkeit durchströmbarer Flächenanteil der Flächenelektrode nicht mehr als 67 %, bevorzugt nicht mehr als 50 %, mehr bevorzugt nicht mehr als 33 % und noch mehr bevorzugt nicht mehr als 25 % ausmacht.

Konkret basiert die Kunststoffmatrix aus einem thermoplastischen Elastomer (TPE), und die elektrisch leitfähigen Partikel basieren auf Kohlenstoff. Das thermoplastische Elastomer kann beispielsweise aus einer Gruppe ausgewählt sein, die folgende Substanzen umfasst: thermoplastische Copolyamide (TPE-A), thermoplastische Polyesterelastomere (TPE-E), thermoplastische Elastomere auf Olefinbasis (TPE-O), insbesondere PP/EPDM, Styrol-Blockcopolymere (TPE-S), wie SBS, SEBS, SEPS, SEEPS und MBS, thermoplastische Elastomere auf Urethanbasis (TPE-U), thermoplastische Vulkanisate (TPE-V) und vernetzte thermoplastische Elastomere auf Olefinbasis.

Mit den eingebetteten elektrisch leitfähigen Partikeln werden elektrische Widerstände der Flächenelektrode eingestellt, die an der Oberfläche der Flächenelektrode typischer Weise kleiner sind als 0,05 Ohm*cm oder noch besser kleiner als 0,03 Ohm*cm und beispielsweise 0,027 Ohm*cm betragen und die im Durchgang durch die Flächenelektrode typischer Weise kleiner sind als 1,0 Ohm*cm oder noch besser kleiner als 0,6 Ohm*cm und beispielsweise 0,5 Ohm*cm betragen.

Bei den Partikeln kann es sich um Ruß- oder Graphitpartikel oder andere nicht ausgeformte Partikel auf Kohlenstoffbasis sowie um Kohlenstoffnanoröhrchen (Carbon Nano Tubes = CNTs) handeln, deren Partikelgröße 1000 µm nicht überschreitet. Relativ kleine Partikel sind leichter homogen in der Kunststoffmatrix zu verteilen, ohne dass sie deren mechanische Eigenschaft kompromittieren.

Bei den in die Kunststoffmatrix eingebetteten elektrisch leitfähigen Partikeln kann es sich weiterhin um Fasern auf der Basis von Kohlenstoff, insbesondere reine Kohlenstofffasern handeln. In die Kunststoffmatrix können grundsätzlich auch Fasern eingebettet sein, die zur reinen mechanischen Verstärkung der Kunststoffmatrix dienen und nicht elektrisch leitfähig sind, beispielsweise Glasfasern.

Bei einer Ausführungsform des erfindungsgemäßen elektrochemischen Fällungsreaktors mit einer verformbaren elektrisch leitfähigen Elektrode, die mit einer in den Fällungsreaktor zu behandelnden Flüssigkeit in Kontakt gelangt, und Verformungseinrichtungen zum wiederholten Verformen der Elektrode, um das Aufwachsen aus der Flüssigkeit ausgefällter Substanzen auf der Elektrode zu behindern und/oder aus der Flüssigkeit ausgefällte und auf der Elektrode aufgewachsene Substanzen von der Elektrode zu entfernen, weist die Elektrode eine flexible Flächenelektrode mit einer flächigen Erstreckung auf, und die Verformungseinrichtungen sind dazu ausgebildet, die Flächenelektrode quer zu ihrer flächigen Erstreckung zu verformen.

Die Flächenelektrode wird von den Verformungseinrichtungen quer zu ihrer flächigen Erstreckung verformt. Anders gesagt wird mindestens ein Bereich gegenüber mindestens einem anderen Bereich der Flächenelektrode quer zu ihrer Haupterstreckungsfläche ausgelenkt. Dabei können die Verformungseinrichtungen die Flächenelektrode zu Schwingungen anregen. Diese Schwingungen können erzwungene oder resonante Schwingungen der Flächenelektrode sein. Dies ist aber für die vorliegende Erfindung grundsätzlich nicht zwingend, auch wenn die Anregung der Flächenelektrode bei ihrer Resonanzfrequenz zu einer Eigenschwingung energetische Vorteile haben kann. Diese energetischen Vorteile beziehen sich auf die Energie, die aufgewandt werden muss, um eine bestimmte Anzahl von Verformungen mit einer bestimmten Amplitude zu realisieren. Die Schwingungen der Flächenelektrode werden aber in jedem Fall durch die in dem elektrochemischen Fällungsreaktor zu behandelnde Flüssigkeit gedämpft, die mit der Elektrode in Kontakt steht. Die quer zu ihrer flächigen Erstreckung, d. h. ihrer Haupterstreckungsfläche verformte Elektrode beeinflusst zwar auch das in dem elektrochemischen Fällungsreaktor ausgebildete elektrische Feld. Da sich jedoch auch an der verformten flexiblen Flächenelektrode keine Feldspitzen ausbilden, ist die Flächenelektrode des erfindungsgemäßen elektrochemischen Fällungsreaktors über ihre gesamte Fläche und nicht nur punktuell wirksam.

Zusätzlich können Katalysatorpartikel in die Kunststoffmatrix oder allgemein in die Flächenelektrode eingebettet und/oder dort, wo die Flächenelektrode mit der in dem Fällungsreaktor zu behandelnden Flüssigkeit in Kontakt gelangt, auf der Oberfläche der Flächenelektrode angeordnet sein. Unter Katalysatorpartikeln sind insbesondere Partikel eines elektrochemisch aktiven Katalysators zu verstehen, der erwünschte elektrochemische Rektionen an der Elektrode begünstigt, beispielsweise ein sauerstoffreduzierender Katalysator zur Vermeidung der Wasserstoffbildung an der Kathode.

Um die Flächenelektrode mit begrenzter Kraft auch stärker verformen zu können, sollte der Elastizitätsmodul eines Materials der Flächenelektrode nicht zu hoch sein. Als günstig hat sich ein Elastizitätsmodul zwischen 100 MPa und 200 MPa oder speziell zwischen 140 MPa und 190 MPa erwiesen. Hinsichtlich der Shore-Härte des Materials der Flächenelektrode mit einer flexiblen Kunststoffmatrix hat sich eine Härte von 90 bis 100 Shore A und insbesondere von 95 bis 100 Shore A als günstig erwiesen. Dabei beträgt eine Dicke der Flächenelektrode in absoluten Maßen typischerweise 0,5 bis 3 mm und in relativen Maßen typischerweise 0,5 % bis 3 % ihrer größten Ausdehnung längs ihrer flächigen Erstreckung.

Die Verformungseinrichtungen des erfindungsgemäßen Fällungsreaktors sind vorzugsweise so ausgebildet, dass sie die Flächenelektrode bezogen auf eine Ausdehnung der Flächenelektrode längs ihrer flächigen Erstreckung von 100 mm wiederholt um mindestens 4 mm oder sogar 8 mm bzw. um mindestens ± 2 mm oder sogar ± 4 mm durchbiegen. Dies sind makroskopische Amplituden. In der Regel werden die Verformungseinrichtungen des erfindungsgemäßen Fällungsreaktors die Flächenelektrode bezogen auf ihre Ausdehnung längs ihrer Haupterstreckungsfläche von 100 mm um nicht mehr als 40 mm, typischerweise um nicht mehr als 20 mm und oft um nicht mehr als 10 mm bzw. um nicht mehr als ± 20 mm, um nicht mehr als ± 10 mm oder um nicht mehr als ± 5 mm durchbiegen. Dabei bedeutet eine Durchbiegungen um ± x mm, dass die Durchbiegung in einander entgegen gesetzten Richtungen aus einer nicht durchgebogenen Grundstellung der Flächenelektrode mit einer positiven wie negativen Amplitude von x mm aufeinander folgen, während eine Durchbiegung von x mm angibt, dass die Durchbiegungen nur in einer Richtung mit einer Amplitude von x mm erfolgen.

Konkret kann die Flächenelektrode in zwei einander über einen Kraftangriffspunkt hinweg gegenüberliegenden Randbereichen eingespannt sein, und die Verformungseinrichtungen können dazu ausgebildet sein, in dem Kraftangriffspunkt an der Flächenelektrode anzugreifen, um diesen in Querrichtung zu ihrer Haupterstreckungsfläche auszulenken. Grundsätzlich kann die Flächenelektrode auch an ihren gesamten Außenumfang eingespannt sein.

Zum Auslenken des Kraftangriffspunkts der Flächenelektrode können die Verformungseinrichtungen insbesondere einen elektromagnetischen Aktuator aufweisen. Dabei ist ein beweglicher Teil des elektromagnetischen Aktuators in die Flächenelektrode integriert oder daran gekoppelt und wird gegenüber einem unbeweglichen Teil des Aktuators bei Ansteuerung des Aktuators ausgelenkt. Mit einem elektromagnetischen Aktuator können die Verformungseinrichtungen die Flächenelektrode in einem großen Frequenzbereich verformen. Insbesondere können die Verformungseinrichtungen dazu ausgebildet sein, die Flächenelektrode mit einer Frequenz zwischen 1 Hz und 20 kHz, vorzugsweise zwischen 10 Hz und 10 kHz und noch mehr bevorzugt zwischen 50 Hz und 1 kHz periodisch zu verformen. Dabei muss die periodische Verformung nicht kontinuierlich erfolgen, sondern sie kann und schon nach wenigen Verformungen unterbrochen werden, um dann in zeitlichen Abständen neu einzusetzen. Diese zeitlichen Abstände können empirisch so festgelegt werden, dass der energetische Einsatz für das Verformen der Flächenelektrode minimiert wird und dennoch das dauerhafte Aufwachsen von aus der jeweiligen Flüssigkeit ausgefällten Substanzen auf der Flächenelektrode vermieden wird.

Auch wenn es andere Ausführungen des erfindungsgemäßen Fällungsreaktors geben kann, bei denen an die Elektrode eine Wechselspannung gegenüber Erde angelegt wird und eine virtuelle Gegenelektrode zu der Elektrode durch die elektrische Kapazität der zu behandelnden Flüssigkeit gebildet wird, weist der erfindungsgemäße Fällungsreaktor in der Regel eine reale Gegenelektrode zu der Elektrode auf. Diese Gegenelektrode kann eine weitere flexible Flächenelektrode mit flächiger Erstreckung aufweisen. Die Verformungseinrichtungen können auch diese weitere Flächenelektrode quer zu ihrer flächigen Erstreckung verformen. Ob dies sinnvoll oder gar notwendig ist, hängt davon ab, ob im Betrieb des Fällungsreaktors, abhängig von dem Vorzeichen der zwischen der Elektrode und der Gegenelektrode angelegten Spannung auch an der Gegenelektrode Substanzen aus der zu behandelnden Flüssigkeit ausfallen und sich potentiell an der Flächenelektrode ablagern. Dies hängt neben dem Vorzeichen der Spannung insbesondere von der Zusammensetzung der zu behandelnden Flüssigkeit ab. Wenn das Vorzeichen der Spannung zwischen der Elektrode und der Gegenelektrode wechselt, ist es in jedem Fall sinnvoll, die Gegenelektrode genauso wie die Elektrode auszubilden und ggf. auch zu verformen. Es ist aber auch möglich eine andere Elektrode, beispielsweise eine bordotierte Diamantelektrode als Gegenelektrode zu der erfindungsgemäßen flexiblen Flächenelektrode vorzusehen. Konkret kann eine solche bordotierte Diamantelektrode als Anode gegenüber einer erfindungsgemäßen flexiblen Flächenelektrode als Kathode, an der der die Neigung zur Verkalkung besteht, vorgesehen werden.

Bei dem erfindungsgemäßen Fällungsreaktor kann zwischen der Flächenelektrode und der Gegenelektrode eine semipermeable Membran angeordnet sein. Diese semipermeable Membran kann zum Beispiel ausschließlich für Protonen durchlässig sein. In jedem Fall ist sie als solche vorzugsweise nicht elektrisch leitfähig. Sie stellt dann auch bei stärkeren Verformungen der Flächenelektrode sicher, dass sich die Elektrode und die Gegenelektrode nicht unter Ausbildung eines Kurzschlusses berühren. Mit andere Worten dient sie als Separator zwischen der Elektrode und der Gegenelektrode. Dass beim Verformen kein Kurzschlussstrom zwischen der Elektrode und der Gegenelektrode fließ, kann selbst dann, wenn sie sich berühren, dadurch erreicht werden, dass eine zwischen der Elektrode und der Gegenelektrode anliegende Spannung während des Verformens abgeschaltet wird.

Bei dem erfindungsgemäßen Fällungsreaktor kann die Flächenelektrode so gegenüber einer Flüssigkeitsführung des Fällungsreaktors angeordnet sein, dass sie nur einseitig mit der zu behandelnden Flüssigkeit in Kontakt gelangt. Grundsätzlich kann die Flächenelektrode auch eine seitliche Wand des Fällungsreaktors ausbilden. Bevorzugt ist es jedoch, wenn die Flächenelektrode so gegenüber der Flüssigkeitsführung des Fällungsreaktors angeordnet ist, dass die Flächenelektrode an ihren beiden Hauptoberflächen mit der in dem Fällungsreaktor zu behandelnden Flüssigkeit in Kontakt gelangt. Dies ist gleichbedeutend damit, dass die Flächenelektrode mit ihren beiden Hauptoberflächen an Teilräume eines Reaktionsraums des Fällungsreaktors angrenzt.

Die Flächenelektrode kann so gegenüber der Flüssigkeitsführung des Fällungsreaktors angeordnet sein, dass die Flächenelektrode, wenn die Verformungseinrichtungen die Flächenelektrode quer zu ihrer flächigen Erstreckung wiederholt verformen, die in dem Fällungsreaktor zu behandelnde Flüssigkeit nach dem Prinzip einer Membranpumpe pumpt. Die bei ihren Verformungen in der Flüssigkeit bewegte Flächenelektrode kann also gezielt dazu genutzt werden, die Flüssigkeit in dem Fällungsreaktor umzuwälzen oder in Verbindung mit beispielsweise Rückschlagventilen nach dem Prinzip einer Membranpumpe durch den Fällungsreaktor zu pumpen. Noch anders gesagt kann die Flächenelektrode die Pumpenmembran einer Membranpumpe des erfindungsgemäßen Fällungsreaktors sein.

Bei einem Verfahren zur elektrochemischen Behandlung einer Flüssigkeit, bei dem die Flüssigkeit mit einer elektrisch leitfähigen Elektrode und einer elektrisch leitfähigen Gegenelektrode in Kontakt gebracht wird, bei dem zwischen der Elektrode und der Gegenelektrode eine elektrische Spannung angelegt wird und bei dem die Elektrode wiederholt verformt wird, um das Aufwachsen aus der Flüssigkeit ausgefällter Substanzen auf der Elektrode zu behindern und/oder aus der Flüssigkeit ausgefällte und auf der Elektrode aufgewachsene Substanzen von der Elektrode zu entfernen, wird beim Verformen eine flexible Flächenelektrode der Elektrode quer zu ihrer flächigen Erstreckung verformt. Mit dieser verformten Flächenelektrode wird das Aufwachsen der ausgefällten Substanzen auch dann verhindert, wenn ein Vorzeichen der zwischen der Elektrode und der Gegenelektrode angelegten elektrischen Spannung gleich bleibt. Dies gilt insbesondere dann, wenn die Flächenelektrode beim Verformen bezogen auf eine Ausdehnung der Flächenelektrode längs ihrer flächigen Erstreckung von 100 mm wiederholt um mindestens 2 mm, 4 mm oder gar 8 mm bzw. in wechselnden Richtungen um mindestens ± 1 mm, ± 2 mm oder gar ± 4 mm durchgebogen wird. Das heißt, bezogen auf eine Ausdehnung von 100 mm wird die Flächenelektrode typischerweise mittig um ein Maß in einem Bereich von 1 bis 10 mm durchgebogen, d. h. quer zu ihrer Haupterstreckungsfläche ausgelenkt. Wenn hier im Zusammenhang mit dem typischen Maß der Durchbiegungen eine Ausdehnung der Flächenelektrode längs ihrer flächigen Erstreckung von 100 mm Bezug genommen wird, so bedeutet dies nicht, dass die Flächenelektrode eine solche Ausdehnung aufweisen muss. Vielmehr können ihre Ausdehnungen längs ihrer flächigen Erstreckung kleiner oder größer sein. Dann sind die typischen Durchbiegungen auch entsprechend kleiner oder größer, wobei sie nicht nur linear sondern auch schwächer mit den Ausdehnungen der Flächenelektrode variieren können. Das Verformen und insbesondere das Durchbiegen der Flächenelektrode kann periodisch mit einer Frequenz zwischen 1 Hz und 10 kHz, vorzugsweise zwischen 10 Hz und 10 kHz und noch mehr bevorzugt zwischen 5 Hz und 1 kHz erfolgen.

Ein Vorzeichen der zwischen der Elektrode und der Gegenelektrode angelegten elektrischen Spannung kann gleich bleiben oder mit einer Frequenz von nicht mehr als 100 Hz, vorzugsweise von nicht mehr als 10 Hz, weiter bevorzugt von nicht mehr als 1 Hz und am meisten bevorzugt von nicht mehr als 0,1 Hz wechseln. Das heißt, die angelegte Spannung ist in der Regel eine Gleichspannung oder eine niederfrequente Wechselspannung. Vielfach ist die Spannung eine Gleichspannung konstanter Höhe.

Das Verfahren kann effizient unter Verwendung eines erfindungsgemäßen Fällungsreaktors durchgeführt werden. Die Verwendung des erfindungsgemäßen Fällungsreaktors kann insbesondere zur Vorbehandlung der jeweiligen Flüssigkeit erfolgen, bevor diese in einer weiteren Aufbereitungsvorrichtung mit weiteren Elektroden, mit Wärme auf die Flüssigkeit übertragenen Heizelementen, mit Katalysatoren und/oder mit Filterelementen in Kontakt gebracht wird, die dazu neigen, dass sich auf oder auch in ihnen in unerwünschter Weise aus der Flüssigkeit ausgefällte Substanzen, insbesondere Kalk aus Wasser, anlagern und ihre Funktion beeinträchtigen. So kann der erfindungsgemäße Fällungsreaktor als Schutzreaktor beispielsweise vor einem elektrochemischen Reaktor angeordnet werden, in dem bordotierte Diamantelektroden zum elektrochemischen Abbau von Pharmaka aus Abwässern angeordnet sind, um diese vor einem Verkalken zu schützen. Der erfindungsgemäße Fällungsreaktor kann als Schutzreaktor weiterhin andere Reaktoren und Wärmetauscher insbesondere vor einem Verkalken schützen. Wenn der erfindungsgemäße Fällungsreaktor als Schutzreaktor vor einem Filterelement angeordnet wird, ist damit kein Filter gemeint, mit dem Fällungsprodukte, die in dem erfindungsgemäßen Fällungsreaktor ausgefällt wurden, von der der jeweiligen Flüssigkeit abgetrennt werden, sondern ein Filterelement, das stromab eines solchen Filters angeordnet wird. Ein solches Filterelement kann eine feinporige und/oder semipermeable Membran aufweisen, durch die die in dem erfindungsgemäßen Fällungsreaktor vorbehandelte Flüssigkeit hindurchtritt, ohne diese schnell, beispielsweise mit Kalk, zuzusetzen.

Wenn der erfindungsgemäße Fällungsreaktor als Schutzreaktor einer weiteren Aufbereitungsvorrichtung vorgeschaltet wird, kann die zu behandelnde Flüssigkeit einmal oder auch mehrmals durch den Schutzreaktor geführt werden, bis die Konzentration der durch Ausfällung abzureichernden Substanzen soweit reduziert ist, dass kein Überschreiten der Löslichkeitsgrenze an den funktionellen Oberflächen der weiteren Aufbereitungsvorrichtung mehr erfolgt. Dabei kann die Flüssigkeit zunächst batchweise in dem Fällungsreaktor behandelt werden, bevor sie anschließend der weiteren Aufbereitungsvorrichtung zugeführt wird.

Eine parallele Behandlung mit Kreislaufführung der aufzubereitenden Flüssigkeit durch den Fällungsreaktor und die weitere Aufbereitungsvorrichtung ermöglicht eine vollständige Behandlung der Flüssigkeit bis auf Zielwerte, die in der aufbereiteten Flüssigkeit erreicht werden sollen.

Bei einer weiteren Aufbereitungsvorrichtung, die nach einem Verfahren mit aufkonzentrierenden Eigenschaften, wie z. B. einem Membranverfahren, Adsorptionsverfahren, Destillationsverfahren oder Strippverfahren arbeitet, ergeben sich in der Regel aus einem Eintrittsstrom zwei Austrittsströme. Eine bevorzugte Ausführungsform der Verwendung des erfindungsgemäßen Fällungsreaktors umfasst eine Rückführung der aufkonzentrierten Flüssigkeitsphase in den Fällungsreaktor. Durch die Aufkonzentrierung nähert sich die Flüssigkeit erneut der Löslichkeitsgrenze. Ein Überschreiten der Löslichkeitsgrenze, das zu Scaling-Effekten, wie Ablagerungen und Verkrustungen, führt, die z. B. bei Membranverfahren zur Membranschädigung führen können, wird durch die Einbindung des Fällungsreaktors in den Konzentratkreislauf verhindert. So wird ein höherer Grad der Aufkonzentrierung und damit auch eine größere Ausbeute an aufbereiteter Flüssigkeit ermöglicht.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Elektrode die Rede ist, ist dies so zu verstehen, dass genau eine Elektrode, zwei Elektroden oder mehr Elektroden vorhanden sind. Die in den Patentansprüchen angeführten Merkmale können durch andere Merkmale ergänzt werden oder die einzigen Merkmale sein, die der jeweilige Fällungsreaktor, dessen Verwendung oder das jeweilige Verfahren aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Vorrichtung mit einem erfindungsgemäßen Fällungsreaktor zur elektrochemischen Behandlung einer Flüssigkeit.
- **Fig. 2**: zeigt eine weitere Vorrichtung mit einer weiteren Ausführungsform des erfindungsgemäßen Fällungsreaktors, der im Vorlauf eines weiteren elektrochemischen Reaktors zur weiteren elektrochemischen Behandlung einer in dem Fällungsreaktor vorbehandelten Flüssigkeit angeordnet ist.
- **Fig.3**: zeigt als Detail eines erfindungsgemäßen Fällungsreaktors eine mit Verformungseinrichtungen quer zu ihrer flächigen Erstreckung verformte Flächenelektrode einer Elektrode.

### FIGURENBESCHREIBUNG

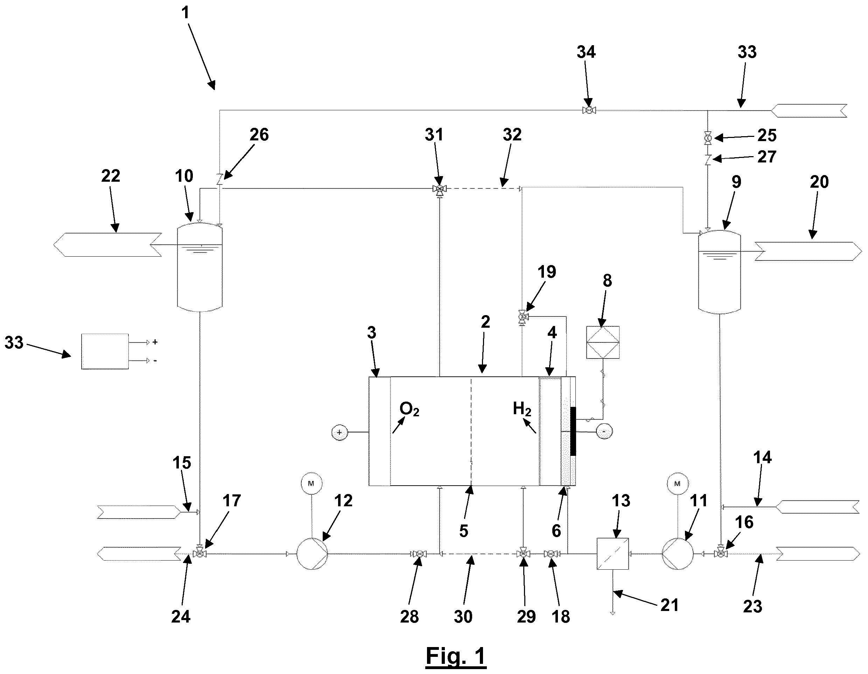

Die in **Fig. 1** dargestellte Vorrichtung 1 umfasst als Kernbestandteil einen Fällungsreaktor 2, in dem eine zu behandelnde Flüssigkeit mit einer Elektrode 4 und einer Gegenelektrode 3 in Kontakt gelangen. Die Elektrode 4 und die Gegenelektrode 3 sind mit einem Minuspol bzw. einem Pluspol einer Spannungsquelle 35 verbunden, so dass die Elektrode 4 als Kathode und die Gegenelektrode 3 als Anode wirksam ist. Zwischen der Elektrode 4 und der Gegenelektrode 3 ist ein Separator 5 in Form einer semipermeablen Membran angeordnet. Zwischen dem Separator 5 und der Gegenelektrode 3 einerseits sowie zwischen dem Separator 5 und der Elektrode 4 sowie durch einen Rückraum 6 auf der dem Separator 5 abgekehrten Rückseite der Elektrode 4 andererseits wird der Fällungsreaktor 2 von zu behandelnder Flüssigkeit durchströmt. Dabei können die genannten Teilräume des Fällungsreaktor 2 von Teilströmen derselben Flüssigkeit oder auch von verschiedenen Flüssigkeiten durchströmt werden. Die an die Elektrode 4 angrenzenden Teilräume, so dass eine durch diese Teilräume strömende Flüssigkeit mit der Elektrode 4 in Kontakt kommt, werden hier auch als Teile eines Reaktionsraums des Fällungsreaktors 2 bezeichnet. Eine Flüssigkeit wird gemäß Fig. 1 über einen Zulauf 14, eine Pumpe 11 und einen Filter 13 zugeführt, wobei stromauf der Pumpe 11 ein Ventil 16 vorgesehen ist, das zu einem Auslauf 23 umschaltbar ist und wobei mit weiteren Ventilen 18 und 29 die Zufuhr der Flüssigkeit zu den Teilbereichen des Fällungsreaktors 2 einstellbar ist. Über das Ventil 29 und einen Bypass 30 kann die über den Zulauf 14 zugeführte Flüssigkeit auch der Anode 3 zugeführt werden. Alternativ ist eine weitere Flüssigkeit über einen weiteren Zulauf 15, eine weitere Pumpe 12 und ein Ventil 28 der Anode 3 zuführbar ist. Dabei ist ein Ventil 17 stromauf der Pumpe 12 zu einem Auslauf 24 hin umschaltbar. An einem Ventil 19 werden die Ströme der Flüssigkeit über die Vorderseite und die Rückseite der Kathode 4 zusammengeführt und gelangen von dort in einen Behälter 9, aus dem ein Produkt 20 abgezogen werden kann. Aus dem Behälter 9 heraus kann die Flüssigkeit zudem erneut mit der Pumpe 11 längs der Kathode 4 durch den Fällungsreaktor 2 zirkuliert werden kann. Auf der Vorderseite der Anode 3 durch den Fällungsreaktor 2 hindurchgetretene Flüssigkeit kann mit einem Ventil 31 über einen Bypass 32 ebenfalls dem Behälter 9 oder alternativ einen weiteren Behälter 10 zugeführt werden, aus dem ein weiteres Produkt 22 abgezogen werden kann. Aus dem Behälter 10 kann die Flüssigkeit zudem mit Hilfe der Pumpe 12 erneut durch den Fällungsreaktor 2 zirkuliert werden. Während hier dargestellt ist, dass der Fällungsreaktor auf beiden Seiten der Membran 2 im Gleichstrom durchströmt wird, kann mit geringen Anpassungen der Vorrichtung 1 auch eine Durchströmung im Gegenstrom erfolgen. So wie die Vorrichtung 1 in Fig. 1 dargestellt ist, kann sie in Bezug auf die Flüssigkeit, die den Fällungsreaktor 2 auf der Anodenseite durchströmt und auch als Anolyt bezeichnet wird, und die Flüssigkeit, die den Fällungsreaktor 2 auf der Kathodenseite durchströmt und deshalb auch als Katholyt bezeichnet wird, auf verschiedene Weisen betrieben werden. Anolyt und Katholyt können in einem gemeinsamen Kreislauf durch den Fällungsreaktor 2 geführt werden. Der Anolyt kann in einem geschlossenen Kreislauf durch den Fällungsreaktor 2 geführt werden, während der Anolyt davon getrennt einfach oder in einem offenen Kreislauf mehrfach durch den Fällungsreaktor 2 geführt wird. Es ist auch möglich, den Anolyt und den Katholyt getrennt und unabhängig voneinander einfach oder in einem offenen Kreislauf mehrfach durch den Fällungsreaktor 2 zu führen.

In dem Fällungsreaktor 2 kann eine Elektrolyse von Wasser erfolgen, die Bestandteil der behandelten Flüssigkeit bzw. Flüssigkeiten ist. Um dabei das Erreichen der unteren Explosionsgrenze durch den an der Anode freigesetzten Sauerstoff und/oder den an der Kathode 4 freigesetzten Wasserstoff zu verhindern, kann Luft oder Stickstoff 33 über Ventile 25 sowie damit in Reihe geschaltete Rückschlagventile 26 und 27 den Behältern 10 und 9 zugeführt werden. Die Rückschlagventile 26 und 27 verhindern dabei den Eintritt von Sauerstoff bzw. Wasserstoff in das eingesetzte Verdünnungsgas 33.

Der Fällungsreaktor2 kann zum Hervorrufen verschiedener elektrochemischer Reaktionen eingesetzt werden, die zum Ausfällen von Substanzen aus der zu behandelnden Flüssigkeit an der Anode 3 und/oder der Kathode 4 führen. Um ein Aufwachsen dieser Substanzen auf der Anode 3 bzw. der Kathode 4 zu verhindern, sind die Anode 3 und die Kathode 4 als Flächenelektroden mit glatter Oberfläche aus einer Kunststoffmatrix mit eingebetteten elektrisch leitfähigen Partikeln ausgebildet. An den glatten Oberflächen dieser Flächenelektroden wachsen aus der Flüssigkeit elektrochemisch ausgefällte Substanzen zu viel geringeren Anteilen auf als auf Elektroden aus herkömmlichen Materialien, wie beispielsweise Metallgittern. So werden die in dem Fällungsreaktor 2 aus der Flüssigkeit ausgefällten Substanzen mit der Flüssigkeit fortgeführt, und der Filter 13 kann sie als Fällungsprodukte 21 abscheiden. Der hier im Zustrom zu dem Fällungsreaktor 2 angeordnete Filter 13 kann auch in dessen Abstrom angeordnet sein, und es können auch mehrere, separate Filter für den Anolyten und den Katholyten vorgesehen werden.

Eine spezielle Verwendung der Vorrichtung 1 besteht darin, Wasser zu entkalken. Dabei kann dieses Wasser ausschließlich als Katholyt oder zugleich als Anolyt im Kreislauf durch den Fällungsreaktor 2 geführt werden. Kalk wird lokal an der Kathodenoberfläche ausgefällt, an der sich eine überhöhte OH⁻-Ionenkonzentration ausbildet, und zwar sowohl auf der Vorderseite als auch der Rückseite der Kathode 4. Zusätzlich zu der glatten Oberfläche der Kathode 4 wird eine Inaktivierung der Kathode 4 durch aufwachsenden Kalk verhindert, indem die Kathode 4 mit Verformungseinrichten 7 und 8 in Form eines Elektromagneten 7, der an eine Wechselspannungsquelle 8 angeschlossen ist, wiederholt makroskopisch verform wird. Diese wiederholte makroskopische Verformung der Kathode 4 ist bei entsprechend flexibler Ausbildung deren Kunststoffmatrix möglich. Durch die makroskopische Verformung der Kathode 4, bei der eine Durchbiegung der Kathode 4 bezogen auf eine Ausdehnung der Kathode 4 längs ihrer flächigen Erstreckung von 100 mm, 8 mm oder ± 4 mm betragen kann, löst sich auch bereits auf der Kathode 4 abgelagerter Kalk wieder von der Kathode 4 ab, wobei diese Ablösung neben der Verformung auch durch die glatte Oberfläche der Kathode 4 erleichtert wird. Der Elektromagnet 7 der Verformungseinrichtungen 7, 8 wirkt beispielsweise auf einen in die Kathode 4 integrierten oder damit mechanisch gekoppelten Permanentmagneten ein und übt so eine magnetische Kraft aus, die die Kathode 4 je nach Stromflussrichtung durch den Elektromagneten zu dem Separator 5 hin oder von diesem weg durchbiegt.

Bei der Erprobung des Fällungsreaktors 2 zum Entkalken von Wasser ergab sich verglichen mit einer bordotierten Diamantelektrode bei gleichem Strom zwischen Anode 3 und Kathode 4 eine etwas geringere Zellspannung und eine nahezu identische Entkalkungswirkung auf den Katholyten. Zugleich war eine auf etwa 50 % reduzierte Kalkablagerung auf den Oberflächen der Kathode mit der Kunststoffmatrix feststellbar. Durch die wiederholte Verformung der Kathode 4 mit der flexiblen Kunststoffmatrix konnte die Kalkablagerung weiter signifikant reduziert und so die Standzeit der Kathode 4 erhöht werden.

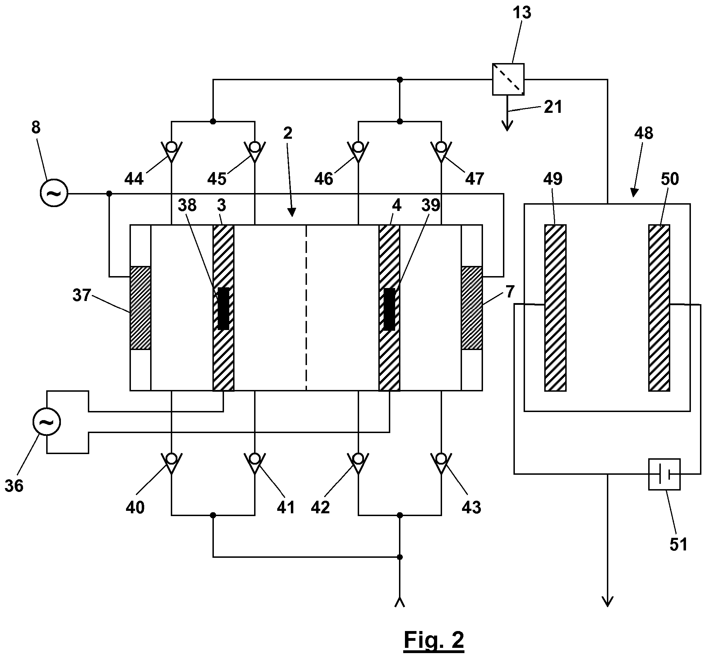

Die Ausführungsform des Fällungsreaktors 2 gemäß **Fig.** 2 ist symmetrisch zu dem Separator 5 ausgebildet. Das heißt, beide Elektroden 3, 4 sind mit Verformungseinrichtungen 7, 8, 37 bis 39 verformbar. Zudem ist die jeweilige Elektrode 3, 4 mittig zwischen dem Separator 5 und der Seitenwand des Fällungsreaktors 2 angeordnet, in der der Elektromagnet 7 bzw. 37 angeordnet ist, der auf den in die jeweilige Elektrode eingebetteten Permanentmagneten 39 bzw. 38 einwirkt. In Verbindung mit Rückschlagventilen 40 bis 47 wirken sich die mit den Verformungseinrichtungen 7, 8, 37 bis 39 verformten Elektroden 3, 4 als Membranpumpen für die zu behandelnde Flüssigkeit aus und fördern die zu behandelnde Flüssigkeit durch den Fällungsreaktor 2. Dabei ist hier der Anolyt identisch mit dem Katholyt und statt einer Gleichspannung von der Gleichspannungsquelle 35 gemäß Fig. 1 wird eine niederfrequente Wechselspannung von einer Wechselspannungsquelle 36 zwischen den Elektroden 3 und 4 angelegt, die so wechselweise als Anode und Kathode wirksam sind. Zur Vermeidung des Hervorrufens eines Differenzdrucks über den Separator 5 können die Elektroden 3 und 4 gegensinnig verformt werden, d. h. jeweils aufeinander zu oder voneinander weg durchgebogen werden. Der Fällungsreaktor 2 ist gemäß Fig. 2 als Schutzreaktor für einen weiteren Reaktor 48 für eine elektrochemische Behandlung der Flüssigkeit vorgesehen. In diesem weiteren Reaktor 48 sind beispielsweise bordotierte Diamantelektroden 49 und 50 als Anode und Kathode vorgesehen und an eine Gleichspannungsquelle 51 angeschlossen, um in einem Abwasser enthaltende Pharmaka abzubauen. Der als Schutzreaktor verwendete Fällungsreaktor 2 dient in diesem Fall dazu, Kalk aus dem Abwasser auszufällen, das dann mit dem Filter 13 abgetrennt werden kann, um eine Inaktivierung der Elektroden 49 und 50 durch aufwachsenden Kalk zu verhindern und damit deren Standzeiten wesentlich zu verlängern.

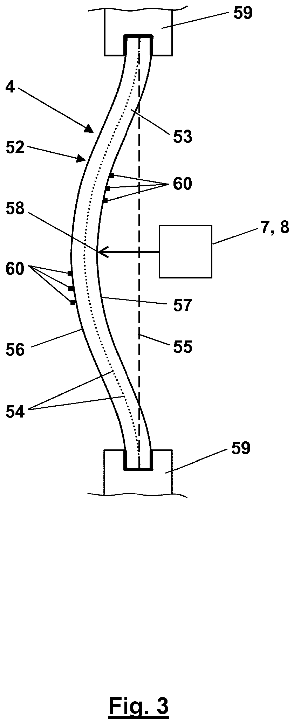

**Fig. 3** zeigt schematisch im vergrößerten Maßstab eine von den Verformungseinrichtungen 7, 8 verformte Flächenelektrode 52 der Elektrode 4. Konkret ist die an ihrem Außenumfang in Einspannungen 59 eingespannte Flächenelektrode 52 durch Angriff an einem mittigen Kraftangriffspunkt 58 quer zu ihrer flächigen Erstreckung verformt, die durch eine gestrichelte Linie 55 angezeigt ist. Die Flächenelektrode 52 weist die Kunststoffmatrix 53 auf, in die die elektrisch leitfähigen Partikel 54 eingebettet sind und an deren Oberflächen 56 und 57 ebenfalls partikelförmige Katalysatoren 60 angeordnet sein können. Die Kunststoffmatrix 53 ist so flexibel, dass sie die Verformung mit den Verformungseinrichtungen 7, 8 toleriert, und dennoch aufgrund der eingebetteten elektrisch leitfähigen Partikel 54 ausreichend elektrisch leitfähig, um als Elektrode 4 in dem Fällungsgenerator 2 gemäß den Fig. 1 und 2 nutzbar zu sein. An ihren Hauptoberflächen, d. h. den Oberflächen 56 und 57, die mit der in dem Fällungsreaktor 2 zu behandelnden Flüssigkeit in Kontakt gelangen, ist die Flächenelektrode 52 glatt ausgeformt, um das Anhaften von aus der zu behandelnden Flüssigkeit ausgefällten Substanzen zu erschweren bzw. das Wiederentfernen derartiger Anhaftungen durch das Verformen der Flächenelektrode 52 gemäß Fig. 3 zu erleichtern.

### BEZUGSZEICHENLISTE

- 1: Vorrichtung
- 2: Fällungsreaktor
- 3: Gegenelektrode, Anode
- 4: Elektrode, Kathode
- 5: Separator, semipermeable Membran
- 6: Rückraum
- 7: Verformungseinrichtung, Elektromagnet
- 8: Verformungseinrichtung, Wechselspannungsquelle
- 9: Behälter
- 10: Behälter
- 11: Pumpe
- 12: Pumpe
- 13: Filter
- 14: Zulauf
- 15: Zulauf
- 16: Ventil
- 17: Ventil
- 18: Ventil
- 19: Ventil
- 20: Produkt
- 21: Fällungsprodukte
- 22: Produkt
- 23: Auslauf
- 24: Auslauf
- 25: Ventil
- 26: Rückschlagventil
- 27: Rückschlagventil
- 28: Ventil
- 29: Ventil
- 30: Bypass
- 31: Ventil
- 32: Bypass
- 33: Verdünnungsgas, Luft/Stickstoff
- 34: Ventil
- 35: Gleichspannungsquelle
- 36: Wechselspannungsquelle
- 37: Verformungseinrichtung, Elektromagnet
- 38: Verformungseinrichtung, Permanentmagnet
- 39: Verformungseinrichtung, Permanentmagnet
- 40: Rückschlagventil
- 41: Rückschlagventil
- 42: Rückschlagventil
- 43: Rückschlagventil
- 44: Rückschlagventil
- 45: Rückschlagventil
- 46: Rückschlagventil
- 47: Rückschlagventil
- 48: Reaktor
- 49: Anode
- 50: Kathode
- 51: Gleichspannungsquelle
- 52: Flächenelektrode
- 53: Kunststoffmatrix
- 54: elektrisch leitfähiger Partikel
- 55: Linie, Erstreckung
- 56: (Haupt-)Oberfläche
- 57: (Haupt-)Oberfläche
- 58: Kraftangriffspunkt
- 59: Einspannung
- 60: Katalysator

## Patentansprüche

1. Elektrochemischer Fällungsreaktor (2) mit einer elektrisch leitfähigen Elektrode (4),
- wobei die Elektrode (4) eine Flächenelektrode (52) mit einer flächigen Erstreckung (55) aufweist, die mit einer in dem Fällungsreaktor (2) zu behandelnden Flüssigkeit in Kontakt gelangt,
- wobei die Flächenelektrode (52) eine Kunststoffmatrix (53) umfasst, wobei die Flächenelektrode (52) dort, wo sie mit der in dem Fällungsreaktor (2) zu behandelnden Flüssigkeit in Kontakt gelangt, eine glatte Oberfläche (56, 57) aufweist,
**dadurch gekennzeichnet,**
- **dass** die Kunststoffmatrix (53) auf einem thermoplastischen Elastomer basiert und die glatte Oberfläche (56, 57) ausbildet,
- **dass** in die Kunststoffmatrix (53) eingebettete elektrisch leitfähige Partikel (54) auf Kohlenstoff basieren und
- **dass** die Partikel (54) eine Partikelgröße bis zu 1000 µm aufweisen.

2. Fällungsreaktor (2) nach Anspruch 1, **dadurch gekennzeichnet, dass** das thermoplastische Elastomer aus einer Gruppe ausgewählt ist, die thermoplastische Copolyamide (TPE-A), thermoplastische Polyesterelastomere (TPE-E), thermoplastische Elastomere auf Olefinbasis (TPE-O), PP/EPDM, Styrol-Blockcopolymere (TPE-S), SBS, SEBS, SEPS, SEEPS, MBS, thermoplastische Elastomere auf Urethanbasis (TPE-U), thermoplastische Vulkanisate (TPE-V) und vernetzte thermoplastische Elastomere auf Olefinbasis umfasst.

3. Fällungsreaktor (2) nach Anspruch 1 oder 2, **dadurch gekennzeichnet, dass** mit den eingebetteten elektrisch leitfähigen Partikeln elektrische Widerstände der Flächenelektrode (52) eingestellt sind, die an der Oberfläche der Flächenelektrode (52) kleiner sind als 0,05 Ohm*cm oder kleiner sind als 0,03 Ohm*cm und die im Durchgang durch die Flächenelektrode (52) kleiner sind als 1,0 Ohm*cm oder kleiner sind als 0,6 Ohm*cm.

4. Fällungsreaktor (2) nach einem der vorhergehenden Ansprüche, **dadurch gekennzeichnet, dass** die Partikel Ruß- oder Graphitpartikel, andere nicht ausgeformte Partikel auf Kohlenstoffbasis oder Kohlenstoffnanoröhrchen (Carbon Nano Tubes = CNTs) sind.

5. Fällungsreaktor (2) nach einem der vorhergehenden Ansprüche, **dadurch gekennzeichnet, dass** in die Kunststoffmatrix (53) elektrisch leitfähige und/oder verstärkende Fasern eingebettet sind.

6. Fällungsreaktor (2) nach einem der vorhergehenden Ansprüche, **dadurch gekennzeichnet, dass** zwischen der Elektrode (4) und einer Gegenelektrode (3) zu der Elektrode (4) eine semipermeable Membran (5) angeordnet ist, die ausschließlich für Protonen durchlässig ist.

7. Fällungsreaktor (2) nach einem der vorhergehenden Ansprüche, **dadurch gekennzeichnet,**
- **dass** die elektrisch leitfähige Elektrode (4)verformbar ist, wobei die Flächenelektrode (52) flexibel ist, und
- **dass** Verformungseinrichtungen (7, 8, 37-39) zum wiederholten Verformen der Elektrode (4) vorhanden sind, um das Aufwachsen aus der Flüssigkeit ausgefällter Substanzen auf der Elektrode (4) zu behindern und/oder aus der Flüssigkeit ausgefällte und auf der Elektrode (4) aufgewachsene Substanzen von der Elektrode (4) zu entfernen, wobei die Verformungseinrichtungen (7, 8, 37-39) dazu ausgebildet sind, die Flächenelektrode (52) quer zu ihrer flächigen Erstreckung (55) zu verformen.

8. Fällungsreaktor (2) nach Anspruch 7, **dadurch gekennzeichnet, dass** die Verformungseinrichtungen (7, 8, 37-39) dazu ausgebildet sind, die Flächenelektrode (52) verformen, indem sie die Flächenelektrode (52) bezogen auf eine Ausdehnung der Flächenelektrode (52) längs ihrer flächigen Erstreckung (55) von 100 mm wiederholt um mindestens 4 mm oder 8 mm oder ± 2 mm oder ± 4 mm durchbiegen.

9. Fällungsreaktor (2) nach einem der Ansprüche 7 und 8, **dadurch gekennzeichnet, dass** die Flächenelektrode (52) in zwei einander über einen Kraftangriffspunkt (58) hinweg gegenüberliegenden Randbereichen eingespannt ist und dass die Verformungseinrichtungen (7, 8, 37-39) dazu ausgebildet sind, in dem Kraftangriffspunkt (58) an der Flächenelektrode (52) anzugreifen.

10. Fällungsreaktor (2) nach einem der Ansprüche 7 bis 9, **dadurch gekennzeichnet, dass** die Verformungseinrichtungen (7, 8, 37-39) einen elektromagnetischen Aktuator aufweisen und/oder dass die Verformungseinrichtungen (7, 8, 37-39) die Flächenelektrode (52) mit einer Frequenz zwischen 1 Hz und 20 kHz, zwischen 10 Hz und 10 kHz oder zwischen 50 Hz und 1 kHz periodisch verformen.

11. Fällungsreaktor (2) nach einem der vorhergehenden Ansprüche, **dadurch gekennzeichnet, dass** die oder eine Gegenelektrode (3) zu der Elektrode (4) eine weitere flexible Flächenelektrode mit einer flächigen Erstreckung aufweist und dass die Verformungseinrichtungen (7, 8, 37-39) dazu ausgebildet sind, auch die weitere Flächenelektrode quer zu ihrer flächigen Erstreckung zu verformen.

12. Fällungsreaktor (2) nach einem der vorhergehenden Ansprüche, **dadurch gekennzeichnet, dass** Katalysatorpartikel in die Flächenelektrode (52) eingebettet und/oder dort, wo die Flächenelektrode (52) mit der in dem Fällungsreaktor (2) zu behandelnden Flüssigkeit in Kontakt gelangt, auf der Oberfläche (56, 57) der Flächenelektrode (52) angeordnet sind.

13. Fällungsreaktor (2) nach einem der vorhergehenden Ansprüche, **dadurch gekennzeichnet, dass** ein Material der Flächenelektrode (52) einen Elastizitätsmodul zwischen 100 MPa und 200 MPa oder zwischen 140 MPa und 190 MPa und/oder eine Härte von 90 bis 100 Shore A oder von 95 bis 100 Shore A aufweist, wobei eine Dicke der Flächenelektrode (52) 0,5 mm bis 3 mm oder 0,5 % bis 3 % ihrer größten Ausdehnung beträgt.

14. Fällungsreaktor (2) nach einem der vorhergehenden Ansprüche, **dadurch gekennzeichnet, dass** die Flächenelektrode (52) mit ihren beiden Hauptoberflächen (56, 57) an Teilräume eines Reaktionsraums des Fällungsreaktor (2) angrenzt und/oder dass die Flächenelektrode (52) eine Pumpenmembran einer Membranpumpe ist.

15. Verwendung eines Fällungsreaktors (2) nach einem der vorhergehenden Ansprüche zur Vorbehandlung der Flüssigkeit, bevor diese mit weiteren Elektroden (49, 50), mit Wärme auf die Flüssigkeit übertragenden Heizelementen, mit Katalysatoren und/oder mit Filterelementen in Kontakt gebracht wird.

## Claims

1. Electrochemical precipitation reactor (2) comprising an electrically conductive electrode (4),
- wherein the electrode (4) comprises an area electrode (52) having a two-dimensional extension (55) which gets into contact with a liquid to be treated in the precipitation reactor (2),
- wherein the area electrode (52) includes a plastic matrix (53), wherein the area electrode (52) has a smooth surface (56, 57) there, where it gets into contact with the liquid to be treated in the precipitation reactor (2),
**characterized in**
- **that** the plastic matrix (53) is based on a thermoplastic elastomer and forms the smooth surface (56, 57),
- **that** electrically conductive particles (54) embedded in the plastic matrix (53) are based on carbon, and
- **that** the particles (54) have a particle size of up to 1000 µm.

2. Precipitation reactor (2) according to claim 1, **characterized in that** the thermoplastic elastomer is selected from a group including thermoplastic copolyamides (TPE-A), thermoplastic copolyesters (TPE-E), thermoplastic polyolefin elastomers (TPE-O), PP/EPDM, styrenic block copolymers (TPE-S), SBS, SEBS, SEPS, SEEPS MBS, thermoplastic polyurethanes (TPE-U), thermoplastic vulcanizates (TPE-V) and cross-linked thermoplastic polyolefin elastomers.

3. Precipitation reactor (2) according to claim 1 or 2, **characterized in that**, by means of the embedded electrically conductive particles, electric resistances of the area electrode (52) are adjusted, which are smaller than 0.05 Ohm*cm or smaller than 0.03 Ohm*cm at the surface of the area electrode (52), and which are smaller than 1.0 Ohm*cm or smaller than 0.6 Ohm*cm in a passage through the area electrode (52).

4. Precipitation reactor (2) according to any of the preceding claims, **characterized in that** the particles are carbon black or graphite particles, other unshaped particles on a carbon base or carbon nanotubes (CNTs).

5. Precipitation reactor (2) according to any of the preceding claims, **characterized in that** electrically conductive and/or reinforcing fibers are embedded in the plastic matrix (53).

6. Precipitation reactor (2) according to any of the preceding claims, **characterized in that** a semi-permeable membrane (5) which is only permeable for protons is arranged between the electrode (4) and a counter-electrode (3) for the electrode (4).

7. Precipitation reactor (2) according to any of the preceding claims, **characterized in**
- **that** the electrically conductive electrode (4) is deformable, wherein the area electrode (52) is flexible, and
- **that** deformation devices (7, 8, 37-39) for repeatedly deforming the electrode (4) are provided to inhibit the accumulation of substances precipitated from the liquid on the electrode (4) and/or to remove substances precipitated from the liquid and accumulated on the electrode (4) from the electrode (4), wherein the deformation devices (7, 8, 37-39) are configured to deform the area electrode (52) perpendicular to its two-dimensional extension (55).

8. Precipitation reactor (2) according to claim 7, **characterized in that** the deformation devices (7, 8, 37-39) are configured to deform the area electrode (52) **in that** they repeatedly bend the area electrode (52) by at least 4 mm or 8 mm or ± 2 mm or ± 4 mm related to an extent of the area electrode (52) along its two-dimensional extension (55) of 100 mm.

9. Precipitation reactor (2) according to any of the claims 7 and 8, **characterized in that** the area electrode (52) is clamped fix in two border regions facing each other across a force application point (58), and that the deformation devices (7, 8, 37-39) are configured to engage the area electrode (52) in the force application point (58).

10. Precipitation reactor (2) according to any of the claims 7 to 9, **characterized in that** the deformation devices (7, 8, 37-39) comprise an electromagnetic actuator and/or that the deformation devices (7, 8, 37-39) periodically deform the area electrode (52) at a frequency between 1 Hz and 20 kHz, between 10 Hz and 10 kHz or between 50 Hz and 1 kHz.

11. Precipitation reactor (2) according to any of the preceding claims, **characterized in that** the or a counter-electrode (3) for the electrode (4) comprises a further flexible area electrode with a two-dimensional extension, and that the deformation devices (7, 8, 37-39) are configured to also deform the further area electrode perpendicular to its two-dimensional extension.

12. Precipitation reactor (2) of any of the preceding claims, **characterized in that** catalyzer particles are embedded in the area electrode (52) and/or arranged at the surface (56, 57) of the area electrode (52) there, where the area electrode (52) gets into contact with the liquid to be treated in the precipitation reactor (2).

13. Precipitation reactor (2) according to any of the preceding claims, **characterized in that** a material of the area electrode (52) has a modulus of elasticity between 100 MPa and 200 MPa or between 140 MPa and 190 MPa and/or a hardness of 90 to 100 Shore A or of 95 to 100 Shore A, wherein a thickness of the area electrode (52) is 0.5 mm to 3 mm or 0.5 % to 3 % of its maximum extent.

14. Precipitation reactor (2) according to any of the preceding claims, **characterized in that** the area electrode (52) adjoins partial spaces of a reaction space of the precipitation reactor (2) by means of its two main surfaces (56, 57) and/or that the area electrode (52) is a pump membrane of a membrane pump.

15. Use of a precipitation reactor (2) according to any of the preceding claims for pretreatment of a liquid, before the liquid is brought into contact with further electrodes (49, 50), with heating elements transferring heat to the liquid, with catalyzers and/or with filter elements.

## Revendications

1. Réacteur de précipitation électrochimique (2) avec une électrode électroconductrice (4),
- dans lequel l'électrode (4) comprend une électrode plane (52) avec une extension plane (55), qui entre en contact avec un liquide à traiter dans le réacteur de précipitation (2),
- dans lequel l'électrode plane (52) comprend une matrice de matière plastique (53), dans lequel l'électrode plane (52) présente une surface lisse (56, 57) à l'endroit où elle entre en contact avec le liquide à traiter dans le réacteur de précipitation (2),
**caractérisé en ce que**
- la matrice de matière plastique (53) est basée sur un élastomère thermoplastique et forme la surface lisse (56, 57),
- les particules électroconductrices (54) incorporées dans la matrice de matière plastique (53) sont à base de carbone et
- les particules (54) présentent une taille jusqu'à 1000 µm.

2. Réacteur de précipitation (2) selon la revendication 1, **caractérisé en ce que** l'élastomère thermoplastique est sélectionné dans un groupe comprenant des copolyamides thermoplastiques (TPE-A), des élastomères de polyesters thermoplastiques (TPE-E), des élastomères thermoplastiques à base d'oléfines (TPE-O), PP/EPDM, des copolymères séquencés de styrène (TPE-S), SBS, SEBS, SEPS, SEEPS, MBS, des élastomères thermoplastiques à base d'uréthane (TPE-U), des vulcanisats thermoplastiques (TPE-V) et des élastomères thermoplastiques réticulés à base d'oléfines.

3. Réacteur de précipitation (2) selon la revendication 1 ou 2, **caractérisé en ce que** les particules électroconductrices incorporées permettent de régler des résistances électriques de l'électrode plane (52) qui sont inférieures, à la surface de l'électrode plane (52), à 0,05 Ohm*cm ou inférieures à 0,03 Ohm*cm et qui sont inférieures, dans le passage à travers l'électrode plane (52), à 0,1 Ohm*cm ou inférieures à 0,6 Ohm*cm.

4. Réacteur de précipitation (2) selon l'une des revendications précédentes, **caractérisé en ce que** les particules sont des particules de suie ou de graphite, d'autres particules non formées à base de carbone ou de nanotubes de carbone (Carbon Nano Tubes = CNT).

5. Réacteur de précipitation (2) selon l'une des revendications précédentes, **caractérisé en ce que**, dans la matrice de matière plastique (53), sont incorporées des fibres électroconductrices et/ou de renforcement.

6. Réacteur de précipitation (2) selon l'une des revendications précédentes, **caractérisé en ce que**, entre l'électrode (4) et une contre-électrode (3) correspondant à l'électrode (4), est disposée une membrane semi-perméable (5) qui est perméable exclusivement pour les protons.

7. Réacteur de précipitation (2) selon l'une des revendications précédentes, **caractérisé en ce que**
- l'électrode électroconductrice (4) est déformable, dans lequel l'électrode plane (52) est flexible et
- des dispositifs de déformation (7, 8, 37-39) pour la déformation répétitive de l'électrode (4) sont présents, afin d'empêcher le dépôt de substances précipitées à partir du liquide sur l'électrode (4) et/ou afin d'éliminer les substances précipitées à partir du liquide et se déposant sur l'électrode (4), dans lequel les dispositifs de déformation (7, 8, 37-39) sont conçus pour déformer l'électrode plane (52) transversalement par rapport à son extension plane (55).

8. Réacteur de précipitation (2) selon la revendication 7, **caractérisé en ce que** les dispositifs de déformation (7, 8, 37-39) sont conçus pour déformer l'électrode plane (52) en pliant l'électrode plane (52) par rapport à une extension de l'électrode plane (52) le long de son extension plane (55) de 100 mm de manière répétitive d'au moins 4 mm ou 8 mm ou ±2 mm ou ±4 mm.

9. Réacteur de précipitation (2) selon l'une des revendications 7 et 8, **caractérisé en ce que** l'électrode plane (52) est serrée dans deux zones de bord opposées au-delà d'un point d'application de force (58) et **en ce que** les dispositifs de déformation (7, 8 37-39) sont conçus pour agir au niveau du point d'application de force (58) sur l'électrode plane (52).

10. Réacteur de précipitation (2) selon l'une des revendications 7 à 9, **caractérisé en ce que** les dispositifs de déformation (7, 8, 37-39) comprennent un actionneur électromagnétique et/ou **en ce que** les dispositifs de déformation (7, 8, 37-39) déforment l'électrode plane (52) de manière périodique avec une fréquence entre 1 Hz et 20 kHz, entre 10 Hz et 10 kHz ou entre 50 Hz et 1 kHz.

11. Réacteur de précipitation (2) selon l'une des revendications précédentes, **caractérisé en ce que** la ou une contre-électrode (3) correspondant à l'électrode (4) comprend une autre électrode plane flexible avec une extension plane et **en ce que** les dispositifs de déformation (7, 8, 37-39) sont conçus pour déformer également l'autre électrode plane transversalement par rapport à son extension plane.

12. Réacteur de précipitation (2) selon l'une des revendications précédentes, **caractérisé en ce que** des particules de catalyseur sont incorporées dans l'électrode plane (52) et/ou sont disposées sur la surface (56, 57) de l'électrode plane (52), à l'endroit où l'électrode plane (52) entre en contact avec le liquide à traiter dans le réacteur de précipitation (2).

13. Réacteur de précipitation (2) selon l'une des revendications précédentes, **caractérisé en ce qu'**un matériau de l'électrode plane (52) présente un module d'élasticité entre 100 MPa et 200 MPa ou entre 140 MPa et 190 MPa et/ou une dureté de 90 à 100 Shore A ou de 95 à 100 Shore A, dans lequel une épaisseur de l'électrode plane (52) est entre 0,5 mm et 3 mm ou représente de 0,5 % à 3 % de son extension la plus grande.

14. Réacteur de précipitation (2) selon l'une des revendications précédentes, **caractérisé en ce que** l'électrode plane (52) est adjacente, avec ses deux surfaces principales (56, 57), à des chambres partielles d'une chambre de réaction du réacteur de précipitation (2) et/ou **en ce que** l'électrode plane (52) est une membrane d'une pompe à membrane.

15. Utilisation d'un réacteur de précipitation (2) selon l'une des revendications précédentes pour le pré-traitement du liquide, avant que celui-ci n'entre en contact avec d'autres électrodes (49, 50), avec des éléments chauffants transmettant une chaleur au liquide, avec des catalyseurs et/ou avec des éléments filtrants.
